# EUROPEAN PATENT SPECIFICATION

(11) **EP 3 416 869 B1**
(45) Date of publication and mention of the grant of the patent: **27.11.2019**
(21) Application number: 17707490.3
(22) Date of filing: 15.02.2017
(51) Int. Cl.: B62D 1/16, F16F 1/373, B62D 7/22

(54) **STEERING MOTOR SUSPENSION**
LENKMOTORAUFHÄNGUNG
SUSPENSION DE MOTEUR DE DIRECTION

(30) Priority: 15.02.2016 IT UB20160744
(43) Date of publication of application: 26.12.2018
(73) Proprietor: CNH Industrial Italia S.P.A., 10135 Turin (IT)
(72) Inventor: SIMONI, Marco, 41030 Bastiglia Modena (IT)
(74) Representative: CNH Industrial IP Department
(86) International application number: PCT/EP2017/053350
(87) International publication number: WO 2017/140704

(56) References cited:
- US-A1- 2005 236 216
- US-A1- 2007 007 069
- US-A1- 2010 140 855

## Description

### BACKGROUND OF THE INVENTION

### 1. Field of the Invention

The present invention relates to work machines, and more specifically for components within the steering system of such work machines.

### 2. Description of the Related Art

Work machines play a vital part in a wide variety of activities, including construction, industrial and agricultural. In many cases, the work machines are of a size that it is necessary to use power assisted steering. Typically, power steering systems include a steerable axle assembly, either powered or unpowered, that has a steering actuator powered by pressurized hydraulic fluid. A steering motor supplies pressurized fluid, as appropriate, to steer left, right or a straight ahead setting. The steering motor is mandated by certain governmental regulations to have a direct mechanical connection to the steering wheel shaft. Since the steering wheel and shaft are usually located within an enclosed operator cab, the direct mechanical connection causes the inevitable noise and vibration of the selective routing of hydraulic fluid to be transmitted into the cab environment through the cab housing. The vibrations, if un-damped, generate unacceptable levels of noise.

In the past, the attempts to minimize the noise have focused on complex composite fasteners incorporating elastomeric washers and other devices to prevent a direct non-dampened connection between the cab enclosure and the steering motor. While this has had some effect in reducing noise, it does so with a complex individual fastener which makes the installation and work machine assembly more complicated and time consuming. In addition, the current approach to mount the steering motor can make it difficult to seal the opening in the cab housing through which the steering column shaft extends to the steering motor. A further problem arises with off vertical forces and vibrations that cut through washers and other rigid elements of the fasteners.

US 2007/007069 A1, on which the preamble of claim 1 is based, discloses an elastic support device having a vibration reduction member for supporting a vibration transmission medium.

Accordingly, what is need in the art is a robust and effective suspension system for a steering motor that avoids the above problems.

### SUMMARY OF THE INVENTION

The present invention seeks to provide a suspension system for a steering motor that isolates it from an operator cab.

The invention also seeks to provide an effective sealing of the operator cab.

In one form, the invention is a suspension plate for supporting a steering motor on the exterior of a work machine cab for direct connection to a steering column within the cab through an opening. The suspension plate has an elastomeric base having a thickness and spans and covers the cab opening. First and second reinforcement elements are embedded in the elastomeric base. Each of the reinforcement elements has at least two receptacles for mounting fasteners and a bridge interconnecting the receptacles. The first and second reinforcement elements are spaced from another within the thickness of the elastomeric base and are oriented so that the receptacles receive fasteners from opposite faces of the elastomeric base and the bridges cross over one another.

In another form, the present invention includes a work machine having a chassis, a cab supported by the chassis, a steerable axle and a hydraulic power steering apparatus connected to and driven by a steering motor. A suspension plate supports the steering motor on the exterior of the cab for direct connection to a steering column within the cab through an opening. The suspension plate has an elastomeric base having a thickness and spans and covers the cab opening. First and second reinforcement elements are embedded in the elastomeric base. Each of the reinforcement elements has at least two receptacles for mounting fasteners and a bridge interconnecting the receptacles. The first and second reinforcement elements are spaced from another within the thickness of the elastomeric base and are oriented so that the receptacles receive fasteners from opposite faces of the elastomeric base and the bridges cross over one another.

An advantage of the present invention is a suspension plate for a steering motor that effectively isolates the steering motor from a cab to which it is mounted.

Another advantage of the present invention is a suspension plate for a steering motor that is easy to install.

Still another advantage of the present invention is a suspension plate for a steering motor that effectively supports the steering motor at an orientation other than vertical.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a perspective partial view of a work machine showing only essential elements with which the present invention may be used;
Fig. 2 is an enlarged cross-sectional view of a steering motor suspension plate embodying the invention and used in the work machine of Fig. 1;
Fig. 3 is a perspective view of a pair of reinforcement elements for the suspension plate of Fig. 2;
Fig. 4 is a perspective view of the reinforcement elements of Fig. 3 in their corresponding spatial relations; and
Fig. 5 is a perspective view of the suspension plate with the reinforcement elements shown in Figs. 4 and 5 embedded in the suspension plate.

Corresponding reference characters indicate corresponding parts throughout the several views. The exemplification set out herein illustrates one embodiment of the invention and such exemplification is not to be construed as limiting the scope of the invention in any manner.

### DETAILED DESCRIPTION OF THE INVENTION

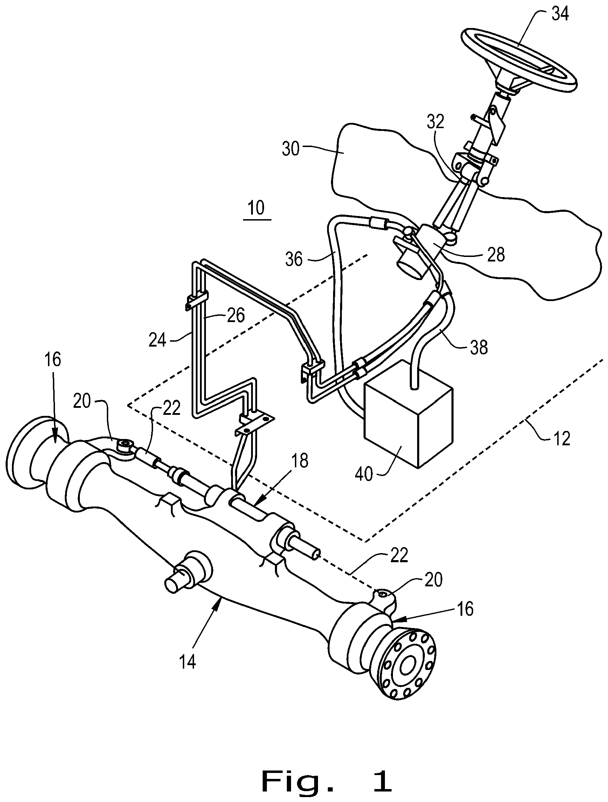

Referring now to the drawings, and more particularly to Fig. 1, there is shown a work machine 10 for use in the fields identified in the introduction. Work machine 10 includes a chassis 12 to which ground drive wheels including a steerable axle assembly 14 are appropriately mounted. Work machine 10 includes a power unit and power train (not shown) to provide a torque input to the wheels of axle assembly 14 for ground movement and for auxiliary power.

The steerable axle assembly 14 has pivotable hubs 16 supporting ground drive wheels which are not shown to enable a simplified description of the invention. The wheel hubs 16 are steered by a hydraulic powered steering assembly 18 that actuates steering arms 20 through tie rods 22. The hydraulic power steering assembly 18 is fed pressurized hydraulic fluid through lines 24 and lines 26 to urge the steering arms 20 into varying degrees of right or left or straight ahead orientation depending up on the pressure in lines 24 and lines 26.

The lines 24 and 26 are connected to a steering motor 28 that is positioned adjacent a cab 30 provided for enclosing a work machine operator. The steering motor 28 receives pressurized fluid to and from a source of pressurized hydraulic fluid 40 through lines 36 and 38. A steering shaft 32 is mechanically connected to the steering motor 28 and extends to a steering wheel 34 that can be manipulated by an operator to produce the appropriate steering inputs. As discussed previously, the steering motor 28 is a generator of noise and, although it must be structurally connected to the operator cab must be isolated to damp out and suppress the vibrations.

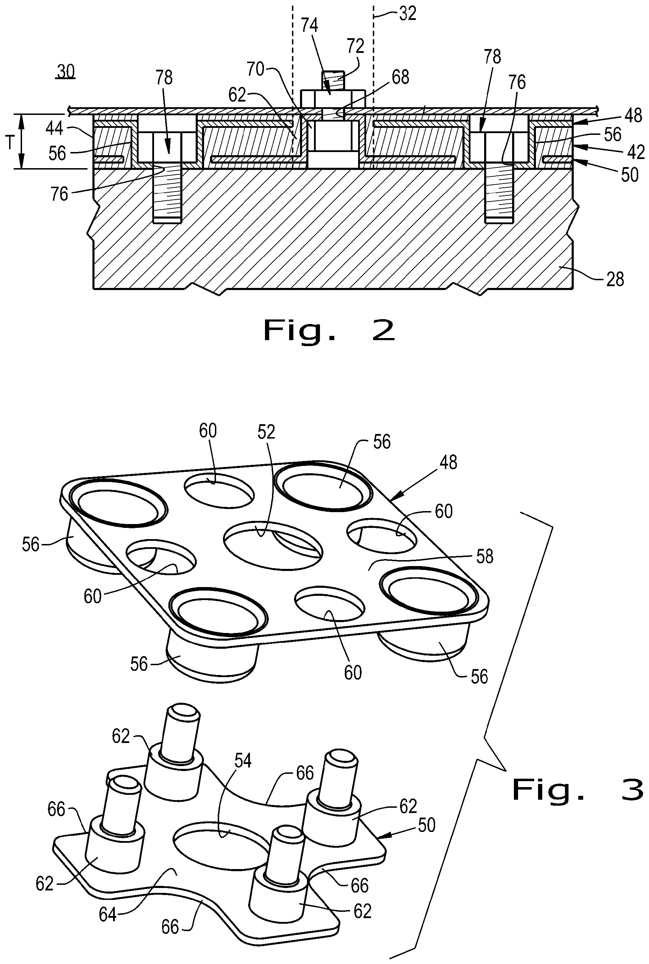

In accordance with the present invention, the steering motor 28 is supported on the cab 30 by a steering motor suspension plate 42 shown in Figs. 2-5. Referring specifically to Fig. 2, the steering motor suspension plate 42 includes a base 44 having a thickness T and width that spans an opening in cab 30 to effectively seal it off. Base 44 is formed from appropriate elastomeric material providing sufficient internal damping to minimize vibration but has sufficient structural integrity and thickness T to accommodate the load inputs between the steering motor 28 and the operator wheel 34. The base 44 has a first metal reinforcement element 48 and a second metal reinforcement element 50 embedded therein, preferably during a molding process for the elastomeric base 44. The first and second metal reinforcement elements 48 and 50 each have central openings 52 and 54 coaxial with a central opening 46 in the steering motor suspension plate 42 that all provide clearance for the steering shaft 32.

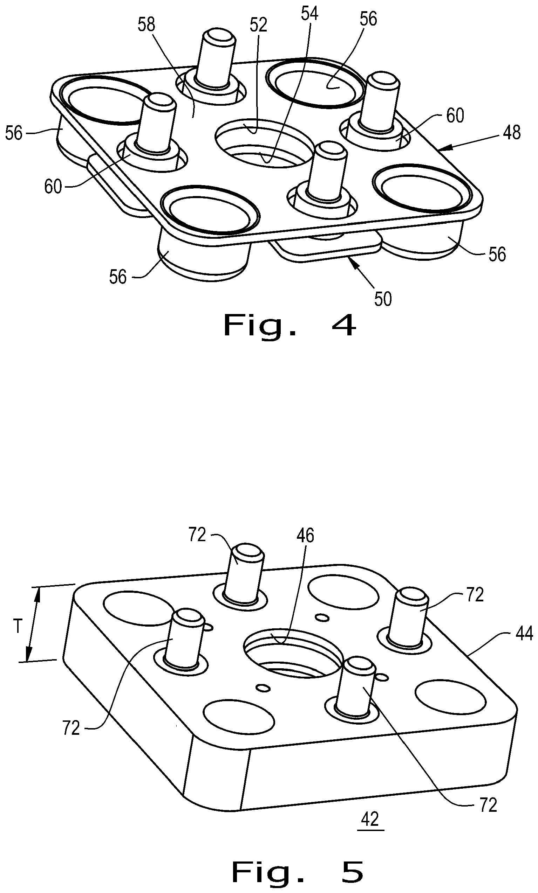

First reinforcement element 48, as shown particularly in Fig. 3, includes cup like fastener receptacles 56 interconnected by a bridge 58, shown as a one-piece structure. The cup like receptacles 56 extend from the plane of the bridge 58 toward the adjacent reinforcement element 50. Bridge 58 includes clearance openings 60 in between the cup-like fastener receptacles 56 to provide clearance for the cup-like receptacles 62 of second reinforcement element 50. The fastener receptacles 62 are interconnected by an integral bridge 64 having scallops 66 to provide clearance for the corresponding fastener receptacles 56 of first reinforcement element 48. The cup like receptacles 62 extend from the plane of the bridge 64 toward the adjacent reinforcement element 48. The clearance between the first and second reinforcement elements 48 and 50 is illustrated in Fig. 4 showing the reinforcement elements nestled together in the absence of the elastomeric base in which they are embedded. The geometry of the bridges and positons of the fastener receptacles for the first and second reinforcement elements 48 and 50 are selected so that there is no metal to metal contact between the steering motor 28 and the cab 30. Although 4 receptacles are shown for each reinforcement element, other numbers may be used to enable the bridge sections to cross over one another.

Referring now to Fig. 2, the fastener receptacles of the second enforcement element 50 contains fasters that have a base 70 fixed in receptacle 62 and a threaded shaft 72 extending through a fastener opening 68 through the cab housing 30 and held in place by a nut 74. Likewise, the fastener receptacles 56 of first reinforcement element 48 have screws 78 extending through fastener openings 76 and which are threaded directly in to steering motor 28. It should be apparent to those skilled in the art that other arrangement of fasteners may also be employed to mount the steering motor 28 to cab 30.

Prior to assembly, the screws 78 attach the steering motor 28 to the steering motor suspension plate 42. The threaded ends 72 of the fasteners of the first reinforcement element 48 extend through the housing of cab 30 and are held in place by nuts 74. As is apparent from Fig. 2, there is no direct metal to metal connection between the housing of cab 30 and the steering motor 28. Thus, the unwanted vibrations are isolated from the cab 30. In addition, the reinforcement elements 48 and 50 have bridge elements 58 and 64 that cross over each other to provide a structure that still stays together in the event of an elastomer failure. Furthermore, the cup-like fastener receptacles 56 and 62 present a sidewise face to the elastomer 44 thus resisting cutting of the elastomer in the event of vibrations and loads that are not parallel to the steering shaft 32. Because the base 44 is an elastomeric monolith, it effectively seals the opening into the cab housing 30 preventing ingress of environmental contaminants.

## Claims

1. A suspension plate (42) for supporting a steering motor (28) on the exterior of a work machine cab (30) for direct connection to a steering shaft (32) which penetrates into the cab (30) through an opening; said suspension plate (42) comprising:
an elastomeric base (44) having a thickness (T) and spanning and covering the cab opening; and,
first and second metal reinforcement elements (48, 50) embedded in said elastomeric base (44); and
**characterized in that** said reinforcement elements (48, 50) each having at least two receptacles (56, 62) for mounting fasteners (70, 72, 74, 78) and a bridge (58, 64) interconnecting said at least two receptacles (56, 62), said reinforcement elements (48, 50) being spaced from one another within said elastomeric base (44) and oriented so that the said at least two receptacles (56, 62), receive fasteners from opposite faces of said elastomeric base (44) and said bridges (58, 64) cross over one another.

2. The suspension plate (42) as claimed in claim 1, wherein said at least two receptacles (56, 62), are cup-like elements extending from the bridge (58, 64) and having an opening (68, 76) through which a fastener extends.

3. The suspension plate (42) as claimed in claim 2, wherein said cup-like elements of each reinforcement element (48, 50) extend out of the plane of their respective interconnecting bridge (58, 64) toward the adjacent reinforcement element (50, 48).

4. The suspension plate (42) as claimed in claim 3, wherein each bridge (58, 64) has clearances, (60, 66) for the cup-like receptacles of the other reinforcement element (50, 48).

5. The suspension plate (42) as claimed in claim 4, wherein one of said bridges (58, 64) has clearance openings (60) and the other has clearance scallops (66).

6. The suspension plate (42) as claimed in any one of the preceding claims having four receptacles (56, 62) for each reinforcement element (48, 50).

7. The suspension plate (42) as claimed in any one of the preceding claims having a fastener (70, 72, 74) fixed in the receptacles (62) of one of said reinforcement elements (50) and having a threaded element (72) extending from the face of the suspension plate (42), the receptacles (56) of the other said reinforcement element (48) receiving screws (78).

8. A work machine (10) comprising a steerable axle assembly (14) and a hydraulic power steering assembly (18) provided with a suspension plate (42) according to any of claims 1 - 7.

## Patentansprüche

1. Aufhängeplatte (42) zum Tragen eines Lenkmotors (28) an der Außenseite eines Arbeitsmaschinen-Führerhauses (30) zur direkten Verbindung mit einer Lenkwelle (32), die durch eine Öffnung in das Führerhaus (30) hindurchdringt; wobei die Aufhängeplatte (42) umfasst:
eine elastomere Grundplatte (44), die eine Dicke (T) aufweist und sich über die Führerhausöffnung erstreckt und diese abdeckt; und
ein erstes und ein zweites Verstärkungselement (48, 50), die in die elastomere Grundplatte (44) eingelassen sind; und
**dadurch gekennzeichnet, dass** die Verstärkungselemente (48, 50) jeweils zumindest zwei Aufnahmen (56, 62) für Befestigungselemente (70, 72, 74, 78) und einen Steg (58, 64) aufweisen, der die zumindest zwei Aufnahmen (56, 62) miteinander verbindet, wobei die Verstärkungselemente (48, 50) in der elastomeren Grundplatte (44) beabstandet voneinander sind und derart ausgerichtet sind, dass die zumindest zwei Aufnahmen (56, 62) Befestigungselemente von gegenüberliegenden Seiten der elastomeren Grundplatte (44) aufnehmen und sich die Stege (48, 64) überschneiden.

2. Aufhängeplatte (42) nach Anspruch 1, wobei die zumindest zwei Aufnahmen (56, 62) napfförmige Elemente sind, die sich vom Steg (58, 64) aus erstrecken und eine Öffnung (68, 76) aufweisen, durch die sich ein Befestigungselement erstreckt.

3. Aufhängeplatte (42) nach Anspruch 2, wobei die napfförmigen Elemente jedes Verstärkungselements (48, 50) sich aus der Ebene der jeweiligen Stege (58, 64) in Richtung des benachbarten Verstärkungselements (50, 48) erstrecken.

4. Aufhängeplatte (42) nach Anspruch 3, wobei jeder Steg (58, 64) Aussparungen (60, 66) für die napfförmigen Aufnahmen des anderen Verstärkungselements (50, 48) aufweist.

5. Aufhängeplatte (42) nach Anspruch 4, wobei einer der Stege (58, 64) Aussparungsöffnungen (60) aufweist und der andere aussparende, bogenförmige Ränder (66) aufweist.

6. Aufhängungsplatte (42) nach einen der vorangehenden Ansprüche, die vier Aufnahmen (56, 62) für jedes Verstärkungselement (48, 50) aufweist.

7. Aufhängeplatte (42) nach einem der vorangehenden Ansprüche, mit einem Befestigungselement (70, 72, 74), das in den Aufnahmen (62) eines der Verstärkungselemente (50) befestigt ist, und mit einem Gewindeelement (72), das sich von der Oberfläche der Aufhängeplatte (42) erstreckt, wobei die Aufnahmen (56) des anderen Verstärkungselements (48) Schrauben (78) aufnehmen.

8. Arbeitsmaschine (10) mit einer lenkbaren Achsanordnung (14) und einer hydraulischen Servolenkungsanordnung (18), die mit einer Aufhängeplatte (42) nach einem der Ansprüche 1 bis 7 ausgestattet ist.

## Revendications

1. Platine de suspension (42) permettant de supporter un moteur de direction (28) sur l'extérieur d'une cabine d'un engin de travail (30) destiné à être connecté directement à un arbre de direction (32) qui pénètre jusque dans la cabine (30) à travers une ouverture, ladite platine de suspension (42) comprenant :
une embase en élastomère (44) ayant une épaisseur (T) et enjambant et recouvrant l'ouverture de cabine, et
des premier et second éléments métalliques de renfort (48, 50) incorporés dans ladite embase en élastomère (44), et
**caractérisée en ce que** lesdits éléments de renfort (48, 50) comportent chacun au moins deux réceptacles (56, 62) permettant de monter des fixations (70, 72, 74, 78) et un pont (58, 64) reliant lesdits au moins deux réceptacles (56, 62), lesdits éléments de renfort (48, 50) étant espacés l'un de l'autre à l'intérieur de ladite embase en élastomère (44) et orientés de telle manière que lesdits au moins deux réceptacles (56, 62) reçoivent des fixations depuis des faces opposées de ladite embase en élastomère (44) et lesdits ponts (58, 64) se croisent mutuellement.

2. Platine de suspension (42) selon la revendication 1, dans laquelle lesdits au moins deux réceptacles (56, 62) sont des éléments en forme de coupelle s'étendant à partir du pont (58, 64) et comportant une ouverture (68, 76) à travers laquelle une fixation s'étend.

3. Platine de suspension (42) selon la revendication 2, dans laquelle lesdits éléments en forme de coupelle de chaque élément de renfort (48, 50) se prolongent au-delà du plan de leur pont d'interconnexion respectif (58, 64) vers l'élément de renfort adjacent (50, 48).

4. Platine de suspension (42) selon la revendication 3, dans laquelle chaque pont (58, 64) comporte des dégagements (60, 66) pour les réceptacles en forme de coupelle de l'autre élément de renfort (50, 48).

5. Platine de suspension (42) selon la revendication 4, dans laquelle l'un des dits ponts (58, 64) comporte des ouvertures de dégagement (60) et l'autre comporte des découpures de dégagement (66).

6. Platine de suspension (42) selon l'une quelconque des revendications précédentes, comprenant quatre réceptacles (56, 62) pour chaque élément de renfort (48, 50).

7. Platine de suspension (42) selon l'une quelconque des revendications précédentes, comprenant une fixation (70, 72, 74) fixée dans les réceptacles (62) d'un des dits éléments de renfort (50) et comportant un élément fileté (72) s'étendant depuis la face de platine de suspension (42), les réceptacles (56) de l'autre dit élément de renfort (48) recevant des vis (78).

8. Engin de travail (10) comprenant un ensemble d'essieu directeur (14) et un système de direction assistée hydraulique (18) équipé d'une platine de suspension (42) selon l'une quelconque des revendications 1 à 7.
